# EUROPÄISCHE PATENTANMELDUNG

(11) **EP 2 053 296 A2**
(43) Veröffentlichungstag der Anmeldung: **29.04.2009**
(21) Anmeldenummer: 08017485.7
(22) Anmeldetag: 06.10.2008
(51) Int. Cl.: F16L 41/16, F16L 55/11

(54) **Verfahren zum Entfernen und Verschließen von Abzweigen bei in Betrieb befindichen Gasleitungen sowie hierzu geeignete Stopfen**

(30) Priorität: 05.10.2007 DE 102007048131
(71) Anmelder: Jeschke, Immanuel, 31157 Sarstedt (DE)
(72) Erfinder: Jeschke, Immanuel, 31157 Sarstedt (DE)
(74) Vertreter: Junius, Walther

(57) **Zusammenfassung**

Die Erfindung betrifft ein Verfahren zum Entfernen und Verschließen von Abzweigen bei in Betrieb befindlichen Gasleitungen sowie einen hierzu geeigneter Stopfen sowie eine dabei zu verwendende Verschlußplatte. Es ist die Aufgabe der Erfindung, die am Hauptrohr verbleibenden Abzweige möglichst kurz zu halten und dafür möglichst kurzgebaute und nicht aus ihrem Sitz herausdrückbare Stopfen zu schaffen, die aber auch allgemein im Rohrleitungsbau verwendbar sind. Das Verfahren der Erfindung besteht darin, daß man auf den Abzweigstutzen eine Gasschleuse aufsetzt, durch diese den vorhandenen Gewinde-Stopfen entfernt und einen Klemm-Stopfen bis nahe vor die Versorgungsleitung einschiebt, der aus zwei koaxial angeordneten, von einer Schraube durchsetzten und mit dieser zusammenpreßbaren Spanntellem besteht, die auf ihrem Umfang zwischen sich einen elastisch aufweitbaren Dichtring einschließen, daß man die die beiden Spannteller axial durchsetzende Schraube durch Hineindrehen in eine Schraubmutter anzieht, die sich auf dem Ende eines achsparalel geschlitzten Blechzylinders abstützt, der an dem einen Spannteller anliegt, wodurch man die zwischen den Schlitzen stehengebliebenen Blechstreifen des Blechzylinders so zusammenfaltet, daß sie eine Zackenkrone bilden, deren Zacken hinter die Wandung der Gasversorgungsleitung greifen und dadurch den Stutzen daran hindern, aus seinem Sitz durch den Gasdruck herausgedrückt zu werden. Hierdurch ist ein fester Sitz des Stopfens in dem Abzweig festgelegt, so daß eine Verschiebung des Stopfens nicht auftreten kann und ein Gasaustritt und eine Gefahrensituation durch eine Gasexplosion ausgeschlossen ist.

## Beschreibung

Die Erfindung betrifft ein Verfahren zum Entfernen und Verschließen von Abzweigen bei in Betrieb befindlichen Gasleitungen sowie einen hierzu geeigneter Stopfen sowie eine dabei zu verwendende Verschlußplatte.

### Stand der Technik

Die alten aus Stahlrohren gefertigten Gasleitungen werden nach und nach durch neue korrosionsfeste Gasleitungen aus Kunststoff ersetzt. Dieses hat ohne Unterbrechung der Gaszufuhr zu den Verbrauchern zu erfolgen. Dabei sind zunächst die von der Hauptleitung abzweigenden Abzweigleitungen von der Hauptleitung zu trennen und auszubauen Das erfolgt möglicht nahe der Hauptleitung, an der jedoch das Abzweig-T-Stück verbleibt, in das ein bisher üblicher Stopfen für die Absperrung eingesetzt ist. Dieser Stopfen besteht aus zwei durch eine Schraube zusammengehaltenen Scheiben, zwischen denen ein Elastomarzylinder angeordnet ist, der sich beim Anziehen der Schraube in seinem Durchmesser so vergrößert, daß er sich fest an die Rohrwandung abdichtend anlegt und dabei auch seinen festen Sitz an der Rohrwandung erhält. Diese Funktionen kann er jedoch nur dann erhalten und ausführen, wenn er nicht am Ort einer Schweißnaht oder sonstigen Unebenheit der Rohrinnenwand eingesetzt ist. Daher setzt man den Stopfen an eine weit von der Hauptleitung entfernte Stelle, wodurch man ein meist nicht kurzes Abzweigstück an der Hauptleitung belassen muß, das aber hinwiederum bei Baggerarbeiten stört und zu Unfällen führen kann.

Einem Baggerführer kann zwar die Lage der Hauptleitung meist sehr genau gesagt werden, die Lage der Abzweige kennt er meist nicht.

### Aufgabe der Erfindung

Die Erfindung vermeidet die Nachteile des Standes der Technik. Es ist die Aufgabe der Erfindung, die am Hauptrohr verbleibenden Abzweige möglichst kurz zu halten und dafür möglichst kurzgebaute und nicht aus ihrem Sitz herausdrückbare Stopfen zu schaffen, die aber auch allgemein im Rohrleitungsbau verwendbar sind.

### Die Erfindung

Das Verfahren der Erfindung besteht darin, daß man auf den Abzweigstutzen eine Gasschleuse aufsetzt, durch diese den vorhandenen Gewinde-Stopfen entfernt und einen Klemm-Stopfen bis nahe vor die Versorgungsleitung einschiebt, der aus zwei koaxial angeordneten, von einer Schraube durchsetzten und mit dieser zusammenpreßbaren Spanntellern besteht, die auf ihrem Umfang zwischen sich einen elastisch aufweitbaren Dichtring einschließen, daß man die die beiden Spannteller axial durchsetzende Schraube durch Hineindrehen in eine Schraubmutter anzieht, die sich auf dem Ende eines achsparalel geschlitzten Blechzylinders abstützt, der an dem einen Spannteller anliegt, wodurch man die zwischen den Schlitzen stehengebliebenen Blechstreifen des Blechzylinders so zusammenfaltet, daß sie eine Zackenkrone bilden, deren Zacken hinter die Wandung der Gasversorgungsleitung greifen und dadurch den Stutzen daran hindern, aus seinem Sitz durch den Gasdruck herausgedrückt zu werden.

Hierdurch ist ein fester Sitz des Stopfens in dem Abzweig festgelegt, so daß eine Verschiebung des Stopfens nicht auftreten kann und ein Gasaustritt und eine Gefahrensituation durch eine Gasexplosion ausgeschlossen ist.

Ist auf diese Weise der Gasaustritt aus der Versorgungsleitung sicher unterbunden, kann weiter gearbeitet werden, indem man nach dem Festsetzen des Stopfens den Abzweig von der Gasversorgungsleitung dicht hinter dem Stopfen abtrennt. An der Gasversorgungsleitung bleibt dann nur noch ein ganz kurzer Stutzen stehen, der bei Baggerarbeiten durch seine Kürze nicht mehr stört.

Um diese Trennstelle gegen alle äußeren Krafteinwirkungen zu schützen, setzt man auf die Trennstelle eine Anschweiß-Verschlußplatte und schweißt diese an der Trennstelle fest, womit man auf Dauer einen sicheren Schutz gegen ungewünschten Gasaustritt erzielt.

Um bei diesem Schweißvorgang nicht den Elastomerring des Stopfens in Mitleidenschaft zu ziehen und durch Materialbeschädigung beim Schweißen undicht werden zu lassen, ist es zweckmässig, daß man vor dem Schweißvorgang auf dieser Platte einen Gewindestift anbringt oder in dieser Platte ein mit Gewinde versehenes Sackloch anordnet und mittels dieser Gewinde einen wärmeableitenden Klotz aufschraubt und dann den Schweißvorgang vornimmt.

Um den Raum zwischen dem Stopfen und der Verschlußplatte nach Beendigung der vorstehend beschriebenen Arbeiten mit Druckgas aus der Hauptleitung zu füllen, was für eine Dichtheitsprüfung notwendig oder zweckmäßig ist, geht man so vor, daß man durch Erhitzen des Restanschlußstutzens den elastischen Dichtring des Klemmstopfens verdampft oder verbrennt.

Der erfindungsgemäße Stopfen für das Verschließen von Abzweigen bei in Betrieb befindlichen Gasleitungen zeichnet sich dadurch aus, daß er aus zwei koaxial angeordneten Spanntellern besteht, die auf ihrem Umfang zwischen sich einen auf den einander zugewandten Seiten angeordneten elastisch aufweitbaren Dichtring einschließen, daß die beiden Spannteller axial von einer Schraube durchsetzt sind, deren Schraubmutter sich auf das Ende eines achsparalel geschlitzten Blechzylinders abstützt, der an dem einen Spannteller anliegt.

Beim Anziehen der Schraube verformen sich die zwischen den Schlitzen des Blechzylinders befindlichen Blechstreifen nach außen und bilden ein Gebilde, das einer Krone mit nach außen gerichteten Zacken ähnlich sieht. Die Enden dieser Zacken greifen hinter die Wandung der Hauptleitung und bilden einen nur mit äußerster Kraft überwindbaren Widerstand gegen Herausziehen oder Herausgedrükt werden.

Zweckmäßig weist der geschlitzte Blechzylinder beidseitig einen ungeschlitzten Abschnitt auf, mit dem er sich beidseitig gegen den einen Spannteller und und die Schraubmutter abstützt.

Bei diesem Stopfen weisen die Schlitze zweckmäßigerweise an den vorgesehenen Biegestellen eine vergrößerte Weite auf. Das kann dadurch erreicht sein, daß vor dem Einbringen der Schlitze drei Bohrungen je Schlitz in das Blech des Blechzylinder eingebracht werden, wonach die Schlitze eingearbeitet werden, die sich jeweils von der ersten bis zur dritten Bohrung erstrecken. Dort, wo die Materialbreite der zwischen den Schlitzen verbliebenen Blechstreifen am geringsten ist, das ist an Orten zwischen den Bohrungen in benachbarten Blechstreifen, findet beim Anziehen der Schraube der Biegevorgang statt. Die drei Bohrungen je Schlitz haben einen unterschiedlichen Abstand von einander, so daß die nach außen austretrenden, aus zwei Blechstreifen bestehenden Zacken ihre Stützwirkung erhalten.Dadurch entsteht aus dem geschlitzten Blechzylinder ein kronenartiges Gebilde mit nach außen weisenden Zacken, die hinter die Wandung des Rohres der Versorgungsleitung fassen.

Bei dem aus zwei Spanntellern und einem zwischen diesen liegenden Dichtring bestehenden Stopfen ist zweckmäßigerweise der den Dichtring tragende Spannteller an seinem Umfang mit einem Absatz versehen, wobei der Dichtring auf dem Teil mit geringerem Durchmesser aufliegt und an dem Teil mit größerem Durchmesser anliegt. Der zweite am Dichtring anliegende und diesen pressende Spannteller weist auf der dem Dichtring zugewandten Seite einen ringförmigen Vorsprung auf, der am Dichtring seitlich anliegt und einen Innendurchmesser entsprechend dem Aussendurchmesser des den Dichtring tragenden Spanntellers aufweist.

Dieser vorstehend beschriebene Stopfen dient lediglich dem temporären Verschluß des Abzweiges. Nach dem Setzen dieses Stopfens wird der Abzweigfitting durch einen Schnitt dicht hinter dem Stopfen gekürzt. Sodann wird auf die Schnittstelle eine Anschweiß-Verschlußplatte für den ehemaligen Gasleitungsabzweig gelegt. Diese ist eine Platte, die mit einem axial angeordneten Gewindestutzen oder einem mit Gewinde versehenen Sackloch versehen ist, auf den ein wärmeableitender Klotz aufschraubbar ist.

Diese Anschweiß-Verschlußplatte hat einen Außendurchmesser größer als der Innendurchmesser des zu verschließenden abzweigenden Rohres und ist mit einem mit einem Absatz versehenen zylindrischen Vorsprung an ihrem Rand versehen, der den Vorsprung in den zu verschließenden Rohrstutzen eintauchen läßt und sich auf die Stirnseite des zu verschliessenden Rohres aufsetzt und dort mit einer Schweißnaht versehen wird.

Das Wesen der Erfindung ist nachstehend anhand eines in der Zeichnung schematisch dargestellten Ausführungsbeispieles näher erläutert. Es zeigen:

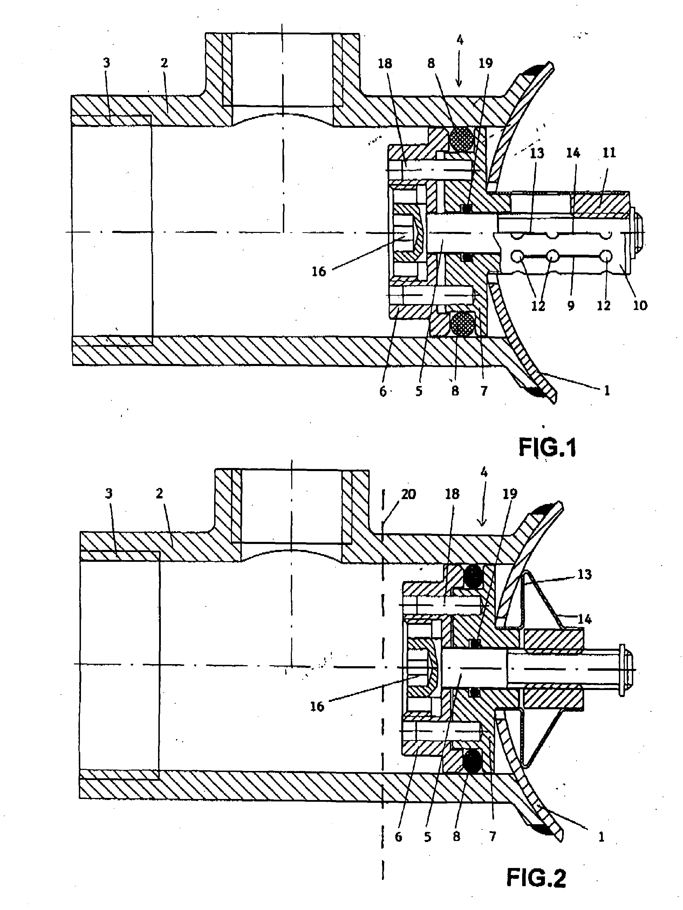

- Fig.1: einen Schnitt durch den auf dem Gasleitungsrohr aufgeschweißten Abzweigstutzen mit eingesetzten Stopfen.
- Fig.2: einen Schnitt durch den Abzeigstutzen und den eingesetzten Stopfen nach dem Auseinanderfalten des Blechzylinders.

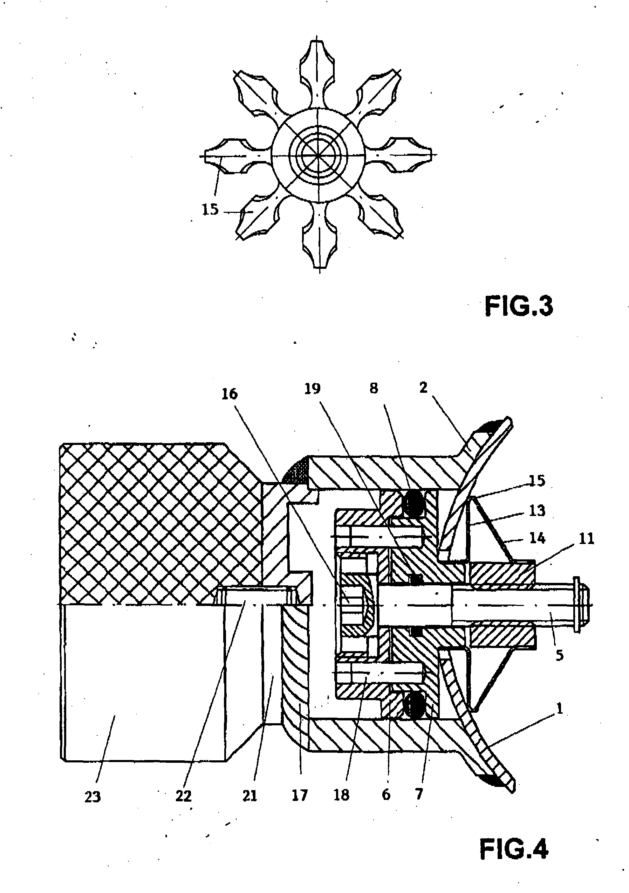

- Fig.3: eine Draufsicht auf den auseinander gefalteten Blechzylinder mit den abgespreizten Zacken.
- Fig.4: einen Schnitt durch den im Abzweigrohr sitzenden Stopfen beim Anschweißen der Verschlußplatte.

Auf dem in Betrieb befindlichen Gasleitungsrohr 1 ist vormals ein Abzweigstutzen 2 aufgeschweißt worden, der nun aus dem Betrieb genommen, verschlossen und abgeschnitten werden soll, ohne daß das Gasleitungsrohr 1 außer Betrieb genommen wird.

Dazu wird auf das Ende des Abzweigstutzens 2 eine nicht dargestellte Gasschleuse montiert und mit deren Hilfe ein im Gewinde 3 eingeschraubter Verschlußstopfen entfernt. Sodann wird durch die Gasschleuse der erfindungsgemäße Klemmstopfen 4 eingeführt und dicht vor dem Gasleitungsrohr 1 festgesetzt.

Dieser Klemmstopfen 4 besteht aus zwei koaxial angeordneten, von einer Schraube 5 durchsetzten und durch diese Schraube 5 zusammenpreßbaren Spanntellern 6,7, die auf ihrem Umfang zwischen sich einen elastisch aufweitbaren Dichtring 8 einschließen. Dieser wird durch Anziehen der Schraube 5 breit gedrückt, legt sich an die Wandung des Abzweigstutzens 2 an und dichtet dadurch den Abzweigstutzen 2 gegen Gaszutritt aus dem Gasleitungsrohr 1 ab.

Dieser Klemmstopfen 4 trägt auf seiner Außenseite einen mit Schlitzen 9 versehenen Blechzylinder 10, der zwischen einer Mutter 11 am Ende der Schraube 5 und dem Spannteller 7 eingespannt ist. Die Schlitze 9 erstrecken sich nicht vollständig über die gesamte Länge des Blechzylinders 10 sondern enden vor den beiden Enden des Blechzylinders 10 um jeweils einen schlitzfreien Ring freizulassen. Die Schlitze 9 sind an ihren beiden Enden und in ihrem mittleren Bereich durch Bohrungen 12 aufgeweitet. Die Abstände zwischen diesen Bohrungen 12 sind ungleich, so daß die zwischen den Schlitzen 9 befindlichen Blechstreifenabschnitte 13,14 ungleiche Länge haben.

Zieht man die die beiden Spannteller 7,8 und den Blechzylinder 10 axial durchsetzende Schraube 5 durch Drehen in die Schraubmutter an, die sich auf dem Ende des achsparalel geschlitzten Blechzylinders 10 abstützt, der an dem einen Spannteller 7 anliegt, verfomt man die zwischen den Schlitzen 9 stehengebliebenen Blechstreifen des Blechzylinders 10 so, daß sie eine Zackenkrone bilden, deren Zacken 15 hinter die Wandung der Gasversorgungsleitung 1 greifen und dadurch den Stopfen daran hindern, aus seinem Sitz durch den Gasdruck herausgedrückt zu werden.

Da die sich beim Eindrehen der Schraube 5 in die Mutter 11 aus der Zylinderform des Blechzylinders 10 herausfaltenden Zacken 15 aus den zwei Abschnitten 16,17 bestehen, von denen der Abschnitt 17 länger ist als der Abschnitt 16, übernimmt der Abschnitt 17 eine Stützfunktion, weil er eine Schrägstellung gegenüber der Innenwand des Gasleitungsrohres einnimmt.

Der Mutter 11 gibt man eine bestimmte Länge, damit sie die Abschnitte 16,17 nicht ungewollt verkrümmt und verformt.

Die beiden Spannteller 6 und 7 sind mit Hilfe von achsparallel eingesetzten Stiften 18 gegen eine Verdrehung gegeneinander gesichert.

Ein in den Spannteller 7 zentral eingesetzter Dichtring 19 verhindert einen Gasdurchtritt längs des Schaftes der Schraube 5.

Hat man den Stopfen 4 in das abzweigende Rohr eingesetzt, führt man einen Trennschnitt längs der gestrichelten Linie 20 aus und entfernt den Rest des Abzweiges 4. Sodann setzt man auf die Schnittstelle eine Anschweiß-Verschlußplatte 21 für den Gasleitungsabzweig aufsetzt und an der Trennstelle anschweißt.

Vor diesem Schweißvorgang bringt man auf dieser Platte einen Gewindestift 22 an und schraubt auf diesen einen wärmeableitenden Klotz 23 auf, der die beim Schweißen entstehende Schweißwärme aufnimmt und in die Umgebung abführt.

Nachdem so die ehemalige Abzweigstelle durch Schweißen sicher verschlossen ist, geht man an die Überprüfung der Dichtheit, indem man durch Erhitzen des Restanschlußstutzens den elastischen Dichtring des Klemmstopfens verbrennt und dann an der Schweißnaht der Verschlußplatte die Dichtheitsprüfung vornimmt.

### Liste der Bezugszeichen

- 1: Gasleitungsrohr
- 2: Abzweigstutzen
- 3: Gewinde
- 4: Klemmstopfens
- 5: Schraube
- 6: Spannteller
- 7: Spannteller
- 8: Dichtring
- 9: Schlitz
- 10: Blechzylinder
- 11: Mutter
- 12: Bohrung
- 13: Blechstreifenabschnitt
- 14: Blechstreifenabschnitt
- 15: Zacken
- 16: Schraubenkopf
- 17: Schweißnaht
- 18: Stift
- 19: Dichtring
- 20: Trennschnittlinie
- 21: Anschweiß-Verschlußplatte
- 22: Gewindestift
- 23: Metallklotz zu Wärmeabführng

## Patentansprüche

1. Verfahren zum Verschließen eines Abzweiges von einer unter Betriebsdruck stehenden Gasversorgungsleitung,
**dadurch gekennzeichnet,**
**daß** man auf den Abzweigstutzen eine Gasschleuse aufsetzt, durch diese den vorhandenen Gewinde-Stopfen entfernt und einen Klemm-Stopfen bis nahe vor die Versorgungsleitung einschiebt,
der aus zwei koaxial angeordneten, von einer Schraube durchsetzten und mit dieser zusammenpreßbaren Spanntellern besteht, die auf ihrem Umfang zwischen sich einen elastisch aufweitbaren Dichtring einschließen,
**daß** man die die beiden Spannteller axial durchsetzende Schraube durch Hineindrehen in eine Schraubmutter anzieht, die sich auf dem Ende eines achsparalel geschlitzten Blechzylinders abstützt, der an dem einen Spannteller anliegt,
wodurch man die zwischen den Schlitzen stehengebliebenen Blechstreifen des Blechzylinders so zusammenfaltet, daß sie eine Zakkenkrone bilden, deren Zacken hinter die Wandung der Gasversorgungsleitung greifen und **dadurch** den Stutzen daran hindern, aus seinem Sitz durch den Gasdruck herausgedrückt zu werden.

2. Verfahren nach Anspruch 1,
**dadurch gekennzeichnet,**
**daß** man nach dem Festsetzen des Stopfens den Abzweig von der Gasversorgungsleitung dicht hinter dem Stopfen abtrennt.

3. Verfahren nach Anspruch 1 und 2, **dadurch gekennzeichnet,**
**daß** man auf die Trennstelle eine Anschweiß-Verschlußplatte für den Gasleitungsabzweig aufsetzt und an der Trennstelle anschweißt.

4. Verfahren nach Anspruch 1 bis 3,
**dadurch gekennzeichnet,**
**daß** man vor dem Schweißvorgang auf dieser Platte einen Gewindestift anbringt oder in dieser Platte ein mit Gewinde versehenes Sackloch anordnet und mittels dieser Gewinde einen wärmeableitenden Klotz aufschraubt und dann den Schweißvorgang vornimmt.

5. Verfahren nach Anspruch 1 bis 4,
**dadurch gekennzeichnet,**
**daß** man durch Erhitzen des Restanschlußstutzens den elastischen Dichtring des Klemmstopfens verbrennt.

6. Stopfen für das Verschließen von Abzweigen bei in Betrieb befindlichen Gasleitungen,
**dadurch gekennzeichnet,**
**daß** er aus zwei koaxial angeordneten Spanntellern besteht, die auf ihrem Umfang zwischen sich einen auf den einander zugewandten Seiten einen elastisch aufweitbaren Dichtring einschließen,
**daß** die beiden Spannteller axial von einer Schraube durchsetzt sind, deren Schraubmutter sich auf das Ende eines achsparalel geschlitzten Blechzylinders abstützt, der an dem einen Spannteller anliegt.

7. Stopfen nach Anspruch 6,
**dadurch gekennzeichnet,**
**daß** der geschlitzte Blechzylinder beidseitig einen ungeschlitzten Abschnitt aufweist.

8. Stopfen nach Anspruch 6,
**dadurch gekennzeichnet**,
Weite aufweisen.

9. Stopfen nach Anspruch 6,
**dadurch gekennzeichnet,**
**daß** der den Dichtring tragende Spannteller an seinem Umfang mit einem Absatz versehen ist,
wobei der Dichtring auf dem Teil mit geringerem Durchmesser aufliegt und an dem Teil mit größerem Durchmesser anliegt.

10. Anschweiß-Verschlußplatte für den Gasleitungsabzweig,
**dadurch gekennzeichnet,**
**daß** die Platte mit einem axial angeordneten Gewindestutzen oder einem mit Gewinde versehenen Sackloch versehen ist, auf den ein wärmeableitender Klotz aufschraubbar ist.

11. Anschweiß-Verschlußplatte nach Anspruch 10,
**dadurch gekennzeichnet,**
**daß** sie einen Außendurchmesser größer als der Innendurchmesser des zu verschließenden abzweigenden Rohres hat und mit einem mit einem Absatz versehenen zylindrischen Vorsprung an ihrem Rand versehen ist, der den Vorsprung in das zu verschließende Rohr eintauchen läßt und sich auf die Stirnseite des zu verschliessenden Rohres aufsetzt.
